# EUROPÄISCHE PATENTSCHRIFT

(11) **EP 2 943 367 B1**
(45) Veröffentlichungstag und Bekanntmachung des Hinweises auf die Patenterteilung: **18.03.2020**
(21) Anmeldenummer: 13795174.5
(22) Anmeldetag: 23.11.2013
(51) Int. Cl.: B60K 37/06, G06F 3/01, G06F 3/03

(54) **VERFAHREN ZUM SYNCHRONISIEREN VON ANZEIGEEINRICHTUNGEN EINES KRAFTFAHRZEUGS**
METHOD FOR SYNCHRONIZING DISPLAY DEVICES IN A MOTOR VEHICLE
PROCÉDÉ DE SYNCHRONISATION DE DISPOSITIFS D'AFFICHAGE D'UN VÉHICULE AUTOMOBILE

(30) Priorität: 08.01.2013 DE 102013000068
(43) Veröffentlichungstag der Anmeldung: 18.11.2015
(73) Patentinhaber: Audi AG, 85045 Ingolstadt (DE); Volkswagen AG, 38436 Wolfsburg (DE)
(72) Erfinder: SCHLITTENBAUER, Michael, 85055 Ingolstadt (DE); ROEHDER, Martin, 85049 Ingolstadt (DE); MAIWAND, Heiko, Foster City CA 94404 (US); COSER, Nathaniel, Palo Alto, CA 94306 (US); BOHRER, Lorenz, 80333 München (DE); STRAUCH, Alexander Sebastian, 57074 Siegen (DE)
(74) Vertreter: Brandt, Kai
(86) Internationale Anmeldenummer: PCT/EP2013/003542
(87) Internationale Veröffentlichungsnummer: WO 2014/108153

(56) Entgegenhaltungen:
- WO-A2-2012/084123
- DE-A1- 10 349 568

## Beschreibung

Die Erfindung betrifft ein Verfahren zum Synchronisieren zweier Anzeigeeinrichtungen eines Kraftfahrzeugs, z.B. eines Head-up-Displays mit einem Display eines Infotainmentsystems in der Mittelkonsole. Eine optische Sensoreinrichtung erfasst in dem Verfahren eine Bediengeste eines Benutzers zum Synchronisieren der Anzeigeeinrichtungen.

Generell werden Funktionen im Kraftfahrzeug bisher durch die Betätigung von z.B. Tasten ausgelöst. Um die Betätigungen z.B. einer Taste zu erfassen, ist für jede Taste ein elektrischer oder kapazitiver Schalter notwendig. Das Auslösen der Funktionen erfordert die Bedienung des z.B. mechanischen Tasters. Anzeigeeinrichtungen wie z.B. ein Head-up-Display, ein Display eines Kombiinstruments oder Infotainmentsystems im Kraftfahrzeug sind rein funktional getrennte Systeme. Die Anzeige von Informationen erfordert ein aufwendiges Bedienen von digitalen Menüs.

Die DE 10 2010 056 411 A1 beschreibt die Anzeige einer Information auf einem Mitteldisplay eines Kraftfahrzeugs zu einem Wegpunkt, zu dem auf einer vorbestimmten anderen Anzeigeeinrichtung, nämlich einem Farbdisplay in der Umgebung der Scheibenwurzel der Frontscheibe, ein Hinweis angezeigt wird. Zur Interaktion der Anzeigeeinrichtungen kann ein Finger-Tracking-System eine Wischgeste eines Benutzers erfassen.

Eine Übertragung eines digitalen Bildes, das auf einem Head-up-Display eines Kraftfahrzeugs angezeigt wird, auf eine andere Anzeigeeinrichtung ist aus der DE 10 2005 010 843 A1 bekannt. Auf der anderen Anzeigeeinrichtung werden nicht mehr informationstragende Daten, sondern ein Icon angezeigt. Die Auslösung dieser Funktion kann über eine Handbewegung des Benutzers erfolgen und über einen optoelektronischen Sensor erfasst werden.

Die DE 10 2007 035 769 A1 beschreibt die Umschaltung der Darstellung von Informationen einer Anzeigeeinrichtung auf eine andere Anzeigeeinrichtung, wobei eine Videokamera eine Handbewegung eines Benutzers erfasst.

Aus der WO 2012/084123 A2 ist eine Anzeigevorrichtung bekannt, wobei eine Bedienung einer ersten Anzeigeeinheit sowie eine Interaktion zwischen der ersten Anzeigeeinheit und einer zweiten Anzeigeeinheit über eine Gestikerkennung erfolgt. Per Wischgeste können mittels einer Übertragungsrichtung Zusatzinformationen zu Wegpunkten einer auf einem Display dargestellten Routeninformation auf ein Mittendisplay übertragen und dargestellt werden.

Aufgrund der vielen möglichen technischen Einrichtungen zum Anzeigen von Informationen ergibt sich jedoch der Nachteil, dass der Benutzer die beiden beteiligten Anzeigeeinrichtungen nicht frei auswählen kann. Ein weiteres Problem ergibt sich, wenn auf einer universellen Anzeigeeinrichtung, z.B. auf einem Kombiinstrument mit Bildschirm, eine Vielzahl von Datensätzen zu unterschiedlichen thematischen Kontexten angezeigt werden, also z.B. Daten zu einer Motordrehzahl, zur Fahrgeschwindigkeit, zum Tankfüllstand und zu erkannten Fehlfunktionen. Die zu synchronisierende Anzeigeeinrichtung des Stands der Technik kann jedoch nur dann synchronisiert werden, wenn die Anzeigeeinrichtung nur Datensätze des gleichen Kontexts anzeigt.

Die Aufgabe der vorliegenden Erfindung ist die Bereitstellung eines Verfahrens zum Synchronisieren zweier beliebiger Anzeigeeinrichtungen.

Die Aufgabe wird von dem erfindungsgemäßen Verfahren gemäß dem Patentanspruch 1 gelöst. Weiterhin wird die Aufgabe von dem erfindungsgemäßen Kraftfahrzeug gemäß dem Patentanspruch 9 gelöst. Vorteilhafte Weiterbildungen der Erfindung sind durch die Unteransprüche gegeben.

Die Erfindung basiert auf der Idee, eine Bediengeste, also eine frei im Raum ausgeführte Bewegung eines Körperteils der Bedienperson, mittels einer Videokamera zu erfassen, die einen dreidimensionalen Bilddatensatz generiert. Die Bediengeste ist dabei bevorzugt eine Zeige-, Zieh- und/oder Greifgeste. Dadurch kann auf eine aufwändige Installation von Bedienelementen in den Anzeigeeinrichtungen verzichtet werden. Außerdem wird die Auswahl der beteiligten Anzeigeeinrichtungen und der relevanten Datensätze ermöglicht.

Das erfindungsgemäße Verfahren dient entsprechend zum Synchronisieren einer ersten Anzeigeeinrichtung eines Kraftfahrzeugs, einem Head-up-Display, mit einer zweiten zu synchronisierenden Anzeigeeinrichtung des Kraftfahrzeugs, also zum Synchronisieren von einem Head-up-Display mit z.B. einem Display in der Mittelkonsole. Die erste Anzeigeeinrichtung zeigt dabei bereits einen ersten Datensatz an, z.B. ein Bildelement (z.B. ein Warnsymbol), der einen ersten Anzeigeinhalt zu einem vorgegebenen thematischen Kontext umfasst.

Eine optische Sensoreinrichtung, z.B. eine PMD-Kamera (also ein Photomischdetektor), erfasst eine Bediengeste eines Benutzers. Die Sensoreinrichtung erzeugt ein die Bediengeste beschreibendes Signal (z.B. ein Videosignal) auf der Grundlage von 3D-Bilddaten und überträgt dieses an eine Gestenerkennungseinrichtung. Bei Empfang des Signals der Sensoreinrichtung ermittelt die Gestenerkennungseinrichtung anhand der ermittelten Bediengeste den von dem Benutzer durch die Bediengeste ausgewählten und den von der ersten Anzeigeeinrichtung bereits angezeigten Datensatz.

Eine Steuereinrichtung, z.B. ein Steuergerät des Kraftfahrzeugs, empfängt ein von der Gestenerkennungseinrichtung erzeugtes Steuersignal, das den ermittelten ersten Datensatz beschreibt, und ermittelt anhand des Steuersignals den vorgegebenen thematischen Kontext des ersten Datensatzes.

Die Steuereinrichtung kann beispielsweise auch ein Programmmodul der ersten oder der zweiten Anzeigeeinrichtung sein, oder in mehreren Teilbereichen, z.B. beiden Anzeigeeinrichtungen, realisiert sein. Ist beispielsweise die Steuereinrichtung ein Programmmodul der ersten Anzeigeeinrichtung, so kann dieses aufgrund des Steuersignals, also aufgrund eines Triggers der Gestenerkennungseinrichtung, den ermittelten vorgegebenen thematischen Kontext des ausgewählten Datensatzes z.B. selbst ermitteln und an die zweite Anzeigeeinrichtung übertragen.

Anhand des ermittelten vorgegebenen thematischen Kontexts wird ein weiterer Datensatz mit einem zweiten Anzeigeinhalt des vorgegebenen thematischen Kontexts bereitgestellt. Der weitere Datensatz wird auf der zweiten Anzeigeeinrichtung anzeigt. Die Bereitstellung des weiteren Datensatzes kann z.B. durch eine der Anzeigeeinrichtungen oder durch eine Datenverarbeitungseinrichtung des Kraftfahrzeugs, gegebenenfalls im Zusammenwirken mit einem zentralen Datenserver im Internet, erfolgen. Überträgt z.B. die erste Anzeigeeinrichtung den ermittelten vorgegebenen thematischen Kontext des ausgewählten Datensatzes an die zweite Anzeigeeinrichtung, so kann diese also z.B. den weiteren Datensatz selbständig ermitteln und anzeigen. Welche Konstellation hier gewählt wird, kann von dem technischen Umfeld abhängen, in dem die Erfindung realisiert wird.

So kann z.B. der erste Datensatz einen Bilddatensatz für z.B. ein Warnsymbol für einen Hinweis auf z.B. einen kritischen Betriebszustand des Kraftfahrzeugs umfassen, während der weitere Datensatz z.B. einen detaillierten Beschreibungstext zu dem kritischen Betriebszustand des Kraftfahrzeugs umfasst. Auf der zweiten Anzeigeeinrichtung kann so z.B. eine die Bilddatei ergänzende Textdatei angezeigt werden, also z.B. eine Fehlerbeschreibung.

Die Gestenerkennungseinrichtung ermittelt anhand des Signals der Sensoreinrichtung, welche der Anzeigeeinrichtungen die den Datensatz bereits anzeigende Anzeigeeinrichtung ist, und welche der Anzeigeeinrichtungen die zu synchronisierende Anzeigeeinrichtung ist. Dies kann z.B. durch eine Ziehgeste von einer Anzeigeeinrichtung zur anderen geschehen. Die Anzeigeeinrichtungen müssen so nicht mehr durch das aufwändige Bedienen eines Menüs über z.B. Tasten ausgewählt werden.

Neben den oben genannten Vorteilen ergibt sich der Vorteil, dass die Anzeigeinhalte nicht nur austauschbar sind, sondern verschiedene Datensätze mit einer unterschiedlichen Menge an Informationsgehalt zu einem Kontext ausgegeben werden können. Trotz einer Vielzahl an verschiedenen Informationen auf einem Display muss der Benutzer zur exakten Auswahl eines Datensatzes also kein Bedienelement wie z.B. eine Taste oder ein digitales Menü bedienen. Dadurch kann der Benutzer auch wählen, wann er zu welcher Information welchen Informationsumfang angezeigt haben möchte.

In einer Ausführungsform des erfindungsgemäßen Verfahrens kann die Steuereinrichtung die Übertragung des weiteren Datensatzes aus einem kraftfahrzeuginternen Datenspeicher an die zu synchronisierende Anzeigeeinrichtung steuern. In diesem Fall liegen in der Datenspeichereinrichtung verschiedene Gruppen von Datensätzen vor, wobei eine Gruppe von Datensätzen diejenigen Datensätze umfasst, die einen gemeinsamen thematischen Kontext haben.

Die Kontexte sind dabei jedoch das Geringste, was vor der Synchronisation bekannt, was und in mindestens einer Datenspeichereinrichtung abgelegt sein muss. Alternativ oder zusätzlich kann die Steuereinrichtung den weiteren Datensatz von einem externen Datenserver abrufen, z.B. von einem Internetserver eines Kraftfahrzeugherstellers, oder auf Basis von Betriebsparametern, die von einer Vorrichtung zum Betrieb des Kraftfahrzeugs bereitgestellt werden, generieren. Solche Datensätze können von der Steuereinrichtung in einer Datensatzgruppe des Datenspeichers bereitgestellt werden.

Zumindest eine der Anzeigeeinrichtungen ist vorzugsweise ohne eigenen Sensor ausgestattet. Insbesondere sind beide Anzeigeeinrichtungen nicht mit einer eigenen Sensorik ausgestattet. Die Bediengeste wird bevorzugt von einer optischen Sensoreinrichtung auf der Grundlage von 3D-Bilddaten einer Time-of-Flight-Kamera (TOF-Kamera), PMD-Kamera oder Stereokamera des Kraftfahrzeugs, die vorzugsweise Teil einer anderen Vorrichtung des Kraftfahrzeugs ist, erfasst. Die hierdurch ermöglichte dreidimensionale Erfassung der Bediengeste ermöglicht die Erfassung einer gerichteten Bewegung und erhöht die Anzahl der Variationen an Bediengesten. Durch die räumlich exakte Erfassung werden die zu synchronisierenden Anzeigeeinrichtungen frei wählbar und es kann eine Vielzahl von Anzeigeeinrichtungen für den Informationsfluss zum Nutzer verwendet werden. Eine bereits im Kraftfahrzeug vorhandene Sensoreinrichtung dieser Art kann für das erfindungsgemäße Verfahren genutzt werden, ohne dass die Anzeigeeinrichtungen mit Sensoren ausgestattet werden müssen. Zudem kann in der Anzeigeeinrichtung auf Bedienelemente wie Taster oder berührungsempfindliche Schaltflächen verzichtet werden.

In einer Weiterbildung dieser Ausführungsform des Verfahrens kann die Gestenerkennungseinrichtung zum Erkennen zumindest eines Teils der Bediengeste eine Trajektorie eines Körperteils, also einer Bewegungskurve eines sich bewegenden Körperteils, dahingehend überprüfen, ob sie eine Zieh- und/oder Greifbewegung von der ersten einer Anzeigeeinrichtung auf die zweite Anzeigeeinrichtung beschreibt. Damit wird die Richtung der Synchronisation erkannt.

Die Gestenerkennungseinrichtung kann zum Erkennen der Bediengeste die Trajektorie eines Körperteils durch Extrapolation des Teils der Bediengeste verlängern und überprüfen, ob die verlängerte Trajektorie eine Zieh- und/oder Greifbewegung darstellt. Dies ermöglicht eine schnellere Bedienung. Die Bediengeste muss also vom Benutzer nicht zu Ende geführt werden, wenn er spontan das die Geste ausführende Körperteil wieder z.B. an das Steuerrad führen muss.

Die oben genannte Aufgabe wird ebenfalls gelöst durch ein Kraftfahrzeug, insbesondere einen Kraftwagen bzw. einen Personenkraftwagen, wenn dieses eine Gestenerkennungseinrichtung umfasst und zur Durchführung einer Ausführungsform des erfindungsgemäßen Kraftfahrzeugs ausgelegt ist.

Die Erfindung wird anhand der beigefügten Zeichnungen noch einmal durch konkrete Ausführungsbeispiele näher erläutert. Die gezeigten Beispiele stellen bevorzugte Ausführungsformen der Erfindung dar. Funktionsgleiche Elemente weisen in den Figuren dieselben Bezugszeichen auf. Es zeigt:
- Fig. 1: ein Blockschaltbild zu einer Sensor- und einer Steuereinrichtung, die in einer Ausführungsform des erfindungsgemäßen Kraftfahrzeugs eingebaut sein können, und
- Fig. 2: eine Skizze zu einer Ausführungsform des erfindungsgemäßen Verfahrens.

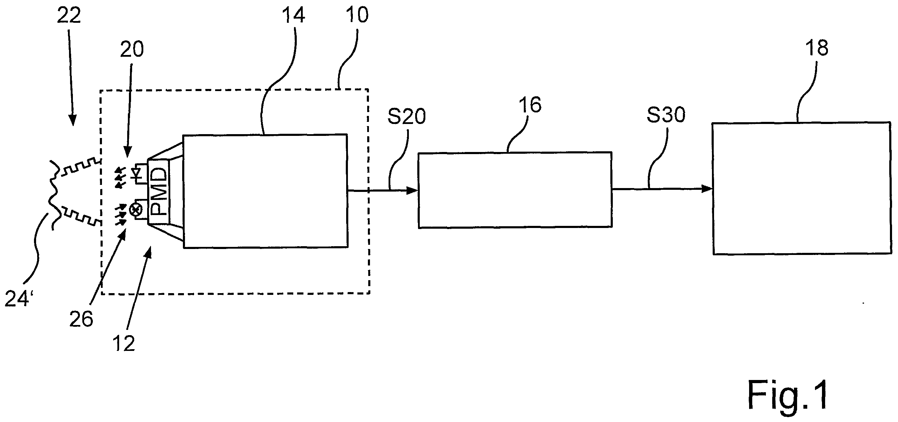

In Fig. 1 ist von einem Kraftwagen, beispielsweise einem Personenkraftwagen, eine Sensoreinrichtung 10 gezeigt. Im vorliegenden Beispiel umfasst die Sensoreinrichtung 10 einen optischen Sensor 12, z.B. eine PMD-Kamera, und eine Messeinrichtung 14, die die Messdaten des optischen Sensors 12 erfassen (Verfahrensschritt S10) und an eine Gestenerkennungseinrichtung 16 übertragen (S20) kann. Der optische Sensor 12 kann auch z.B. eine andere 3D-Kamera, wie z.B. eine TOF-Kamera oder eine Stereokamera, umfassen, und ist bevorzugt am Dachhimmel des Kraftwagens angebracht.

Der optische Sensor 12 kann in an sich bekannter Weise ausgestaltet sein, z.B. mit einer Leuchtquelle 20, z.B. einer Infrarotleuchte, die einen Erfassungsbereich 22 beleuchtet, beispielsweise einen Raum über einem Armaturenbrett des Kraftfahrzeugs. Befindet sich darin ein Objekt, beispielsweise eine Hand 24' des Fahrers des Kraftfahrzeugs, so wird die von der Leuchtquelle 20 ausgestrahlte elektromagnetische Strahlung zu einem Sensorarray 26 zurückgeworfen. Mittels des Sensorarrays 26 können dann 3D-Bilddaten erzeugt werden, welche 3D-Koordinaten zu einzelnen Flächenelementen der Hand 24' angeben. Zusätzlich oder alternativ kann so auch der Innenraum des Kraftwagens vermessen werden. Die 3D-Bilddaten werden von der Messeinrichtung 14 an die Gestenerkennungseinrichtung 16 übertragen.

Bei der Gestenerkennungseinrichtung 16 kann es sich um eine dem Fachmann bekannte Gestenerkennungseinrichtung 16 handeln.

Durch die Gestenerkennungseinrichtung 16 können Gliedmaßen aus den 3D-Bilddaten segmentiert werden, wodurch beispielsweise die Position einer Fingerspitze in dem Erfassungsbereich 22 ermittelt werden kann. Hier können an sich bekannte Segmentierungsalgorithmen zugrunde gelegt werden. Durch die 3D-Bilddaten des Sensorarrays 26 des optischen Sensors 12 kann auch eine Sequenz von aufeinander folgenden 3D-Bildern repräsentiert sein, d.h. mit dem optischen Sensor 12 können auch Bewegungen der Hand 24' oder eine Ausstreckung eines Unterarms erfasst werden. Durch Verfolgen der Trajektorie beispielsweise der Fingerspitze in dieser 3D-Bildsequenz, insbesondere durch Verfolgen der Position und der Geschwindigkeit der Fingerspitze, kann so eine mit der Fingerspitze angedeutete Bewegungsgeste aus der Trajektorie extrapoliert werden.

In Abhängigkeit dieser Auswertung erzeugt die Gestenerkennungseinrichtung 16 dann ein Steuersignal (S30). Die Fig. 1 zeigt weiterhin eine Steuereinrichtung 18 des Kraftwagens, bei der sich z.B. um ein Steuergerät zum Steuern zweier (in der Fig. 1 nicht gezeigter) Anzeigeeinrichtungen 30, 34, handeln kann. Die Steuereinrichtung 18 empfängt das Steuersignal der Gestenerkennungseinrichtung 16 und koordiniert das Zusammenspiel der zu synchronisierenden Anzeigeeinrichtungen 30, 34.

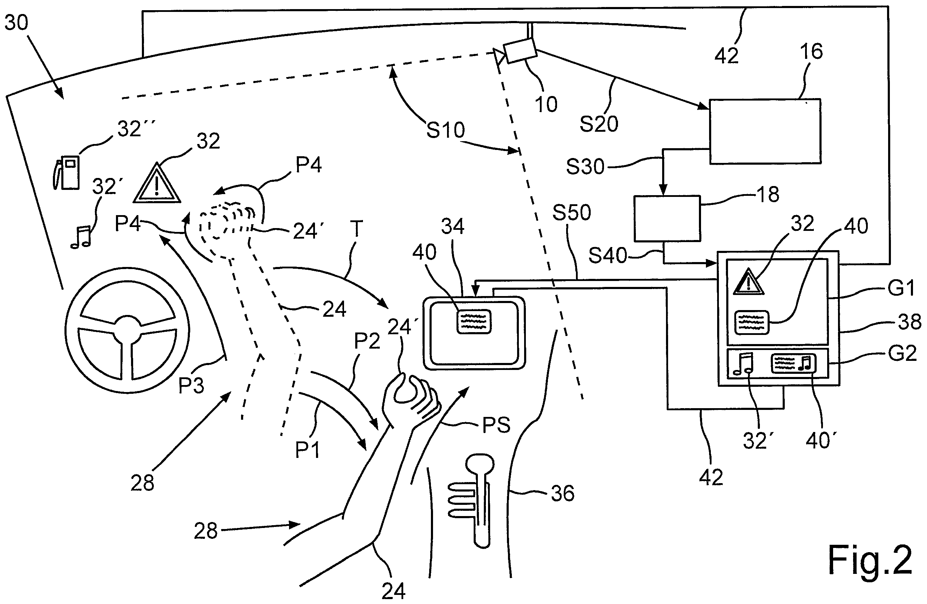

In der Fig. 2 ist eine Ausführungsform des erfindungsgemäßen Verfahrens dargestellt.

Bei der Koordination des Zusammenspiels der zu synchronisierenden Anzeigeeinrichtungen 30, 34 kann, wie im Beispiel der Fig. 2 gezeigt, ein Datensatz aus einer Gruppe von Datensätzen von einer Datenspeichereinrichtung 38 an die zu synchronisierende Anzeigeeinrichtung zur Anzeige des Datensatzes übertragen werden. In diesem Fall kann die Steuereinrichtung 18 also bei Empfang des Steuersignals der Gestenerkennungseinrichtung 16 z.B. ein Synchronisierungssignal erzeugen, das die zweite Anzeigeeinrichtung 34 dazu veranlasst, einen bestimmten Datensatz 40 aus der Datenspeichereinrichtung 38 abzurufen, oder das die Datenspeichereinrichtung 38 dazu veranlasst, den Datensatz 40 an die zweite Anzeigeeinrichtung 34 zu übertragen. Konkret kann dies folgendermaßen aussehen:

Ein Benutzer befindet sich im Innenraum eines Kraftwagens. Auf einer ersten Anzeigeeinrichtung 30, z.B. einem Head-up-Display auf einer Windschutzscheibe, sind mehrere Bildelemente 32, 32', 32" angezeigt, z.B. Warn- oder andere Symbole, die einen Betriebszustand signalisieren. Das Bildelement 32 ist z.B. ein Bild eines Warndreiecks, das den Benutzer über z.B. das Vorhandensein einer wichtigen Betriebsinformation informiert. In der Fig. 2 sind eine erste Position eines Körperteils 24 des Benutzers, z.B. ein Unterarm mit einer Hand 24', (gestrichelte Linie) und eine zweite Position des Körperteils 24 (durchgezogene Linie) gezeigt. Die Stellungen P1 und P2 symbolisieren eine Bewegung des Körperteils 24 von der ersten in die zweite Position. Im vorliegenden Beispiel ist diese Bewegung mit der gezeigten Fingerstellung eine Bediengeste zum Synchronisieren z.B. einer Anzeige 34 eines Infotainmentsystems oberhalb der Mittelkonsole 36 mit der Anzeigeeinrichtung 30. Die Sensoreinrichtung 10, die z.B. eine PMD-Kamera umfasst, erfasst z.B. das Ausstrecken des Unterarms und die Greif- oder Zeigebewegung der Hand 24' (P3).

Die Sensoreinrichtung 10 erfasst die Bediengeste und/oder die Richtung, in die das Körperteil 24 des Benutzers in der Stellung 28 zeigt (S10). Hierzu kann die Sensoreinrichtung 10 die Koordinaten der Hand 24' innerhalb eines Koordinatensystems eines Innenraums des Kraftfahrzeugs erfassen. Mit den Koordinaten werden die an der Synchronisation beteiligten Anzeigeeinrichtungen 30, 34 durch die Gestenerkennungseinrichtung 16 ermittelt. Ebenfalls kann so der Datensatz 32, aus dessen Gruppe in der Datenspeichereinrichtung 38 ein weiterer Datensatz an der zu synchronisierenden Anzeigeeinrichtung 34 angezeigt werden soll, durch die Gestenerkennungseinrichtung 16 ermittelt werden.

Zwischen der Datenspeichereinrichtung 38 und der Anzeigeeinrichtung 30 und zwischen der Datenspeichereinrichtung 38 und der Anzeigeeinrichtung 34 kann eine drahtlose oder drahtgebundene Kommunikationsverbindung 42 vorliegen. Im vorliegenden Beispiel liegen in der Datenspeichereinrichtung 38 die Datensätze 32 und 40 der Datensatzgruppe G1 vor, die beide einen gemeinsamen Kontext haben, z.B. eine Warnmeldung, und die dadurch eine Gruppe bilden. Eine weitere Datensatzgruppe G2 umfasst z.B. die bereits auf dem Head-up-Display 30 angezeigtes Bildelement 32', die z.B. ein gerade erfolgendes Abspielen einer Audiodatei symbolisiert, und eine damit thematisch verbundene Textdatei 40', die z.B. bibliographische Daten zu der Audiodatei 32' umfasst.

Die Erfassung der Bediengeste und/oder der Koordinaten der Bediengeste innerhalb des Koordinatensystems des Innenraums des Kraftfahrzeugs (S10), die Erzeugung eines die Bediengeste beschreibenden Signals und dessen Übertragung an die Gestenerkennungseinrichtung 16 (S20) erfolgt wie bereits in Fig. 1 beschrieben.

Die Gestenerkennungseinrichtung 16 kann z.B. anhand der durch das Signal der Sensoreinrichtung 10 beschriebenen Richtung des sich ausstreckenden Unterarms mit der Hand 24' (P4) ermitteln, dass z.B. die Anzeigeeinrichtung 30 diejenige Anzeigeeinrichtung ist, die bereits einen Datensatz anzeigt. Analog hierzu kann die Gestenerkennungseinrichtung 16 anhand des Signals der Sensoreinrichtung 10, das eine Ziehbewegung (P1, P2) und/oder eine Richtung des Körperteils 24 mit der Hand 24' in einer zweiten Position (P5) beschreibt, ermitteln, dass die Anzeigeeinrichtung 34 die zu synchronisierende Anzeigeeinrichtung 34 ist. Alternativ kann auch z.B. eine Werfgeste in Richtung der zweiten Anzeigeeinrichtung 34 als Auswahlgeste für z.B. die zu synchronisierende Anzeigeeinrichtung 34 ermittelt werden.

Zusätzlich kann die Gestenerkennungseinrichtung 16 anhand der durch das Signal der Sensoreinrichtung 10 beschriebenen Richtung (P3) des ausgestreckten Unterarms mit der Hand 24' bei Ausführung der Greifbewegung (P4) ermitteln, dass der Datensatz 32 der vom Benutzer "ausgewählte" Datensatz ist. Mithilfe der Koordinaten des Körperteils 24 innerhalb des Koordinatensystems des Innenraums des Kraftfahrzeugs kann die Gestenerkennungseinrichtung 16 z.B. die Unterarmachsen und/oder die Fingerachsen ermitteln. Anhand dieser Achsen kann die Stellung 28 des jeweiligen Körperglieds 24 ermittelt werden. Wenn die Unterarmachsen wie im Beispiel der Fig. 2 dann auf das Bildelement 32 zeigen und die Gestenerkennungseinrichtung 16 eine Greifbewegung der Hand 24' ermittelt, wird das Bildelement 32 ausgewählt. Alternativ kann die Gestenerkennungseinrichtung 16 eine Relativbewegung der Hand 24' erfassen und hierdurch auf einen Cursor auf der Anzeigeeinrichtung 30 steuern, wodurch der Benutzer das Bildelement 32 auswählen kann. Dieser erkannten Auswahl des Bildelements 32 folgt die Auswahl des Datensatzes zu dem Bildelement 32. Darauf basierend kann die Steuereinrichtung 18 den vorgegebenen thematischen Kontext und gegebenenfalls z.B. die dazugehörige Gruppe von Datensätzen ermitteln.

Eine weitere Möglichkeit zum Ermitteln des thematischen Kontexts besteht z.B. darin, dass eine von der Gestenerkennungseinrichtung 16 auf Basis einer ermittelten Bediengeste ein Steuersignal erzeugt, auf welches hin die Steuereinrichtung 18 ein Synchronisationssignal erzeugt und dieses an die erste Anzeigeeinrichtung (30) überträgt. Die erste Anzeigeeinrichtung (30) überträgt daraufhin eine Information zu dem thematischen Kontext des ersten Datensatzes (32) an die Steuereinrichtung (18).

Im vorliegenden Beispiel ermittelt die Steuereinrichtung 18 z.B. die Datensatzgruppe G2. Alternativ oder zusätzlich zum in der Fig. 2 gezeigten Beispiel kann die Steuereinrichtung 18 den weiteren Datensatz 40 z.B. von einem Internetserver z.B. eines Kraftfahrzeugherstellers abrufen oder auf Basis von z.B. den Betriebsdaten zu einem Ölstand generieren.

Die Gestenerkennungseinrichtung 16 erzeugt ein entsprechendes Steuersignal an eine Steuereinrichtung 18, die, wie bereits zur Fig. 1 beschrieben, die Anzeige des Datensatzes 40, hier z.B. eine Textmeldung zu der Warnung, auf der Anzeigeeinrichtung 34 veranlasst (S40). Im vorliegenden Beispiel veranlasst die Steuereinrichtung 18 die Datenspeichereinrichtung 38 dazu, den Datensatz 40 an das Display 34 des Infotainmentsystems zu übertragen (S50).

Die Gestenerkennungseinrichtung 16 kann weiterhin dazu ausgestaltet sein, eine Trajektorie (T) eines Körperteils, also z.B. einen Teil der durch die Stellungen P1 und P2 dargestellten Ziehbewegung zu extrapolieren dahingehend zu überprüfen, ob sie eine Zieh- und/oder Greifbewegung darstellen wird. Der Benutzer kann so, z.B. in einer Situation, in der er seinen Arm unvorhergesehen schnell an das Steuerrad zurückziehen muss, das "Verschieben" des Datensatzes (also die Synchronisation der Anzeigeeinrichtungen 30, 34) "anstupsen", also nur andeuten. Dies bedeutet, dass er die Bediengeste nicht bis zum Ende ausführen muss.

Die Beispiele veranschaulichen das Prinzip der Erfindung, gemäß dem eine physikalisch einwandfreie Ortbarkeit der Insassen (z.B. durch eine TOF-Kamera oder eine PMD-Kamera) bzw. von Körperteilen des Insassen erlauben, eine Annäherung an eine Oberfläche zu erkennen. Um Informationen (Kontexte) von einer Anzeigeeinrichtung in eine andere Anzeigeeinrichtung zu verschieben, kann eine Geste verwendet werden. Beispielsweise kann in einem Head-up-Display z.B. ein Warnsymbol angezeigt werden. Greift man z.B. in Richtung des Warnsymbols und zieht dieses z.B. in Richtung Mitteldisplay, kann z.B. eine ausführliche Beschreibung der Warnung erscheinen.

Dies ermöglicht (neben einer Steigerung des Joy-of-use-Faktors) eine universelle Interaktion zwischen den Displays. Zudem sind keine Taster für die Interaktion notwendig.

## Patentansprüche

1. Verfahren zum Synchronisieren einer ersten Anzeigeeinrichtung (30) eines Kraftfahrzeugs, die ein Head-up-Display umfasst, und einer zweiten zu synchronisierenden Anzeigeeinrichtung (34) des Kraftfahrzeugs, wobei die erste Anzeigeeinrichtung (30) einen ersten Datensatz (32), der einen ersten Anzeigeinhalt zu einem vorgegebenen thematischen Kontext umfasst, anzeigt,
wobei eine optische Sensoreinrichtung (10) auf der Grundlage von 3D-Bilddaten eine Bediengeste eines Benutzers erfasst (S10), die eine frei im Raum ausgeführte Bewegung eines Körperteils (24) der Bedienperson umfasst, und ein die Bediengeste beschreibendes Signal erzeugt und an eine Gestenerkennungseinrichtung (16) überträgt (S20) und die Gestenerkennungseinrichtung (16) die Bediengeste anhand des Signals ermittelt, wobei
- die Gestenerkennungseinrichtung (16) anhand der ermittelten Bediengeste einen von dem Benutzer durch die Bediengeste ausgewählten und von der ersten Anzeigeeinrichtung (30) angezeigten Datensatz (32) ermittelt, und wobei
- eine Steuereinrichtung (18) von der Gestenerkennungseinrichtung (16) ein Steuersignal empfängt, das den ermittelten Datensatz (32) beschreibt,
**dadurch gekennzeichnet, dass**
- die Steuereinrichtung (18) anhand des Steuersignals den vorgegebenen thematischen Kontext des ermittelten Datensatzes (32) ermittelt, und dass
- anhand des ermittelten vorgegebenen thematischen Kontexts ein weiterer Datensatz (40) mit einem zweiten Anzeigeinhalt zu dem ermittelten vorgegebenen thematischen Kontext bereitstellt wird, und
- der weitere Datensatz (40) auf der zweiten Anzeigeeinrichtung (34) angezeigt wird, und dass
- die Gestenerkennungseinrichtung (16) anhand des Signals der Sensoreinrichtung ermittelt, welche der Anzeigeeinrichtungen (30, 34) die den ersten Datensatz (32) bereits anzeigende Anzeigeeinrichtung (30) ist und welche der Anzeigeeinrichtungen (30, 34) die zu synchronisierende Anzeigeeinrichtung (34) ist.

2. Verfahren nach Anspruch 1, wobei der dem ersten und dem weiteren Datensatz (32, 40) gemeinsame thematische Kontext ein den Betrieb des Kraftfahrzeugs betreffender Warnhinweis ist.

3. Verfahren nach einem der vorhergehenden Ansprüche, wobei die Steuereinrichtung ein Programmmodul der ersten Anzeigeeinrichtung umfasst und aufgrund des Steuersignals der Gestenerkennungseinrichtung Kontextdaten zu dem ermittelten vorgegebenen thematischen Kontext an die zweite Anzeigeeinrichtung überträgt.

4. Verfahren nach einem der vorhergehenden Ansprüche, wobei die Steuereinrichtung (18) den weiteren Datensatz (40) von einem kraftfahrzeugexternen Datenserver abruft, und/oder auf Basis von Betriebsparametern des Kraftfahrzeugs generiert und/oder die Übertragung des weiteren Datensatzes (40) aus einer Datenspeichereinrichtung (38) an die zu synchronisierende Anzeigeeinrichtung (34) steuert, und/oder den weiteren Datensatz in einem kraftfahrzeuginternen Datenspeicher (38) für die zweite Anzeigeeinrichtung (34) bereitstellt.

5. Verfahren nach Anspruch 4, wobei die Gestenerkennungseinrichtung (16) zum Erkennen zumindest eines Teils der Bediengeste eine Trajektorie (T) eines Körperteils (24) dahingehend überprüft, ob sie eine Ziehbewegung oder eine Zieh- und Greifbewegung von der ersten Anzeigeeinrichtung (30) auf die zweite Anzeigeeinrichtung (34) beschreibt.

6. Verfahren nach einem der vorhergehenden Ansprüche, wobei die Gestenerkennungseinrichtung (16) zum Erkennen der Bediengeste eine Trajektorie (T) eines Körperteils (24) durch Extrapolation verlängert und überprüft, ob die verlängerte Trajektorie (T) eine Ziehbewegung oder eine Zieh- und Greifbewegung darstellt.

7. Verfahren nach einem der vorhergehenden Ansprüche, wobei die Bediengeste von einer Sensoreinrichtung (10) auf der Grundlage von 3D-Bilddaten einer TOF-Kamera, PMD-Kamera oder Stereokamera des Kraftfahrzeugs erfasst wird.

8. Kraftfahrzeug, das eine Gestenerkennungseinrichtung (16) umfasst und zur Durchführung eines Verfahrens nach einem der vorhergehenden Ansprüche ausgelegt ist.

## Claims

1. Method for synchronising a first display device (30) in a motor vehicle, which display device includes a head-up display, and a second display device (34), to be synchronised, of the motor vehicle, wherein the first display device (30) displays a first dataset (32) which includes a first display content regarding a predetermined thematic context,
wherein an optical sensor device (10) on the basis of 3D-image data detects (S10) an operating gesture of a user, which includes a movement, carried out freely in space, of a body part (24) of the operating person, and generates a signal describing the operating gesture and transmits it (S20) to a gesture recognising device (16) and the gesture recognising device (16) determines the operating gesture on the basis of the signal, wherein
- the gesture recognising device (16) on the basis of the detected operating gesture detects a dataset (32) selected by the user by means of the operating gesture and displayed by the first display device (30), and wherein
- a control device (18) receives from the gesture recognising device (16) a control signal which describes the detected dataset (32),
**characterised in that**
- the control device (18) on the basis of the control signal detects the predetermined thematic context of the detected dataset (32), and that
- on the basis of the detected predetermined thematic context a further dataset (40) is provided having a second display content regarding the detected predetermined thematic context, and
- the further dataset (40) is displayed on the second display device (34), and that
- the gesture recognising device (16) determines on the basis of the signal from the sensor device, which of the display devices (30, 34) is the display device (30) already displaying the first dataset (32) and which of the display devices (30, 34) is the display device (34) to be synchronised.

2. Method according to claim 1, wherein the thematic context common to the first and the second dataset (32, 40) is a warning message concerning the operation of the motor vehicle.

3. Method according to any of the preceding claims, wherein the control device includes a program module of the first display device and on the basis of the control signal of the gesture recognising device transmits context data regarding the detected predetermined thematic context to the second display device.

4. Method according to any of the preceding claims, wherein the control device (18) retrieves the further dataset (40) from a data server outside the motor vehicle, and/or generates on the basis of operational parameters of the motor vehicle and/or controls the transmission of the further dataset (40) from a data storage device (38) to the display device (34) to be synchronised, and/or provides the further dataset in a data storage device (38), inside the vehicle, for the second display device (34).

5. Method according to claim 4, wherein the gesture recognising device (16) for recognising at least one part of the operating gesture checks a trajectory (T) of a body part (24) to see whether it describes a pulling motion or a pulling and gripping motion from the first display device (30) onto the second display device (34).

6. Method according to any of the preceding claims, wherein the gesture recognising device (16) for recognising the operating gesture extends a trajectory (T) of a body part (24) by extrapolation and checks whether the extended trajectory (T) constitutes a pulling motion or a pulling and gripping motion.

7. Method according to any of the preceding claims, wherein the operating gesture is detected by a sensor device (10) on the basis of 3D image data of a TOF camera, PMD camera or stereo camera of the vehicle.

8. Motor vehicle which includes a gesture recognising device (16) and is configured to carry out a method according to any of the preceding claims.

## Revendications

1. Procédé de synchronisation d'un premier dispositif d'affichage (30) d'un véhicule automobile, qui comporte un affichage tête haute, et un second dispositif d'affichage (34) à synchroniser du véhicule automobile, dans lequel le premier dispositif d'affichage (30) affiche un premier jeu de données (32) qui comporte un premier contenu d'affichage relatif à un contexte thématique prescrit,
dans lequel un dispositif de détection optique (10) détecte sur la base de données d'image 3D un geste de commande d'un utilisateur (S10) qui comporte un mouvement réalisé librement dans l'espace d'une partie de corps (24) de l'opérateur, et génère un signal décrivant le geste de commande et le transmet à un dispositif de détection de geste (16) (S20) et le dispositif de détection de geste (16) détermine le geste de commande au moyen du signal, dans lequel
- le dispositif de détection de geste (16) détermine au moyen du geste de commande déterminé un jeu de données (32) sélectionné par l'utilisateur par le geste de commande et affiché par le premier dispositif d'affichage (30), et dans lequel
- un dispositif de commande (18) reçoit par le dispositif de détection de geste (16) un signal de commande qui décrit le jeu de données (32) déterminé,
**caractérisé en ce que**
- le dispositif de commande (18) détermine au moyen du signal de commande le contexte thématique prescrit du jeu de données (32) déterminé, et que
- au moyen du contexte thématique prescrit déterminé un autre jeu de données (40) est mis à disposition avec un second contenu d'affichage relatif au contexte thématique prescrit déterminé, et
- l'autre jeu de données (40) est affiché sur le second dispositif d'affichage (34), et que
- le dispositif de détection de geste (16) détermine au moyen du signal du dispositif de détection lequel des dispositifs d'affichage (30, 34) est le dispositif d'affichage (30) affichant déjà le premier jeu de données (32) et lequel des dispositifs d'affichage (30, 34) est le dispositif d'affichage (34) à synchroniser.

2. Procédé selon la revendication 1, dans lequel le contexte thématique commun au premier et à l'autre jeu de données (32, 40) est un avertissement concernant le fonctionnement du véhicule automobile.

3. Procédé selon l'une quelconque des revendications précédentes, dans lequel le dispositif de commande comporte un module de programme du premier dispositif d'affichage et transmet en raison du signal de commande du dispositif de détection de geste des données de contexte relatives au contexte thématique prescrit déterminé au second dispositif d'affichage.

4. Procédé selon l'une quelconque des revendications précédentes, dans lequel le dispositif de commande (18) consulte l'autre jeu de données (40) d'un serveur de données externe au véhicule automobile, et/ou le génère sur la base de paramètres de fonctionnement du véhicule automobile et/ou commande la transmission de l'autre jeu de données (40) d'un dispositif accumulateur de données (38) au dispositif d'affichage (34) à synchroniser, et/ou met à disposition l'autre jeu de données dans un accumulateur de données (38) interne au véhicule automobile pour le second dispositif d'affichage (34).

5. Procédé selon la revendication 4, dans lequel le dispositif de détection de geste (16) vérifie pour la détection au moins d'une partie du geste de commande une trajectoire (T) d'une partie de corps (24) si elle décrit un mouvement de traction ou un mouvement de traction et de préhension du premier dispositif d'affichage (30) sur le second dispositif d'affichage (34).

6. Procédé selon l'une quelconque des revendications précédentes, dans lequel le dispositif de détection de geste (16) prolonge pour la détection du geste de commande une trajectoire (T) d'une partie de corps (24) par extrapolation et vérifie si la trajectoire prolongée (T) représente un mouvement de traction ou un mouvement de traction et de préhension.

7. Procédé selon l'une quelconque des revendications précédentes, dans lequel le geste de commande est détecté par un dispositif de détection (10) sur la base de données d'image 3D d'une caméra TOF, caméra PMD ou caméra stéréo du véhicule automobile.

8. Véhicule automobile qui comporte un dispositif de détection de geste (16) et est conçu pour la réalisation d'un procédé selon l'une quelconque des revendications précédentes.
